# EUROPEAN PATENT SPECIFICATION

(11) **EP 0 813 899 B1**
(45) Date of publication and mention of the grant of the patent: **26.10.2005**
(21) Application number: 97110144.9
(22) Date of filing: 20.06.1997
(51) Int. Cl.: B01D 53/94, F01N 3/28

(54) **Catalyst element for purifying exhaust gases from internal combustion engine**
Katalysatorelement zum Reinigen des Abgases einer Brennkraftmaschine
Elément catalyseur pour purifier des gaz d'échappement d'un moteur à combustion interne

(30) Priority: 20.06.1996 JP 16027196
(43) Date of publication of application: 29.12.1997
(73) Proprietor: HONDA GIKEN KOGYO KABUSHIKI KAISHA, Minato-ku, Tokyo (JP); MITSUI KINZOKU KOGYO KABUSHIKI KAISHA, Chuo-ku Tokyo-To (JP)
(72) Inventor: Fujii, Jun, Ageo-shi, Saitama-ken (JP); Kunisaki, Toshiya, Ageo-shi, Saitama-ken (JP); Nakamori, Masaharu, Honda Gijutsu Kenkyusho K.K., Wako-shi, Saitama-ken (JP); Kato, Hiroshi, Honda Gijutsu Kenkyusho K.K., Wako-shi, Saitama-ken (JP)
(74) Representative: Melzer, Wolfgang

(56) References cited:
- EP-A- 0 315 253
- EP-A- 0 399 203
- US-A- 4 426 319
- US-A- 5 208 206
- DATABASE WPI Section Ch, Week 9650 Derwent Publications Ltd., London, GB; Class H06, AN 90-228554 XP002063753 & JP 02 553 678 B (MATSUSHITA ELEC IND CO LTD) , 13 November 1996

## Description

### TECHNICAL FIELD

The present invention relates to a catalyst element for purifying exhaust gases from an internal combustion engine. It relates, in particular, to a catalyst element for purifying exhaust gases (hereinafter also simply called a catalyst element) which is superior in heat resisting property and in resistance against vibrations, and which is capable of performing superior purifying characteristics even under severe thermal conditions and vibrating conditions.

### BACKGROUND ART

In a motorcycle and a four-wheeled vehicle, a catalyst element is disposed in a flow passage of exhaust gases in order to reduce the contents of carbon monoxide (CO), hydrocarbons (HC), or the like in the exhaust gases from an internal combustion engine thereof.

As a catalyst element, there is generally known a three-way catalyst which is made by coating a metallic honeycomb-shaped carrier (or substrate) made, for example, of a heat-resistant stainless steel with a catalytic substance containing precious metals. As a catalyst element for use in a two-wheeled vehicle such as a motorcycle, there is known one in which an exhaust pipe is directly coated on its internal surface with a catalytic substance (see Japanese Published Unexamined (i.e., publicly laid-open) Patent Application No. 8912/1975) or one in which a catalytic substance is carried on (or contained in) a fabric carrier (or substrate) made by knitting or weaving a fibrous heat-resistant inorganic oxide (see Japanese Published Unexamined Patent Application No. 117816/1979).

Among the above-described catalyst elements, in the catalyst element in which the catalytic substance is directly carried on the metallic carrier, the catalytic substance is likely to be peeled off the carrier due to a thermal expansion or vibrations of the base material (e.g., stainless steel) which constitutes the carrier. In the catalyst element in which the carrier is made of a fabric material, on the other hand, the catalytic substance is likely to be peeled off the carrier due to vibrations and due to wear that is caused by the vibrations. Both of the above-described catalyst elements have therefore a disadvantage in that the purifying capacity will consequently be decreased. They have both a disadvantage in that the durability is poor and therefore that a sufficient exhaust gas purifying capacity will cease to be obtained when used in a vehicle, particularly in a motorcycle, for services under severe conditions such as repeated heating and cooling as well as vibrations.

In order to eliminate this kind of disadvantages by increasing the adhering strength between the metallic carrier and the catalytic substance, there is known a catalyst element in which a metallic carrier is coated on its surface with alumina by means of plasma spraying, whereby the catalytic substance is carried on the plasma-sprayed layer (see Japanese Published Unexamined Patent Application No. 85318/1991). In case a hollow carrier, for example, is used in this prior art, it is not possible to sufficiently and uniformly spray the inner peripheral surface of the carrier with alumina by plasma spraying. It has therefore a problem in that there is a limitation or restriction to the shape of the carrier that can be employed in carrying out this prior art.

Further, there is also known a catalyst element in which a catalytic substance is adhered to the surface of a ferritic stainless steel containing aluminum which has formed on its surface alumina whiskers by heat treatment at a high temperature (see Japanese Published Unexamined Patent Application No. 157143/1991). However, in order to obtain a good shape of alumina whiskers, there is a limitation or restriction to the material that can be used. Any one of the above-described catalyst elements is expensive for use as a catalyst element for purifying exhaust gases in a vehicle, especially a motorcycle, and is therefore not suitable for practical use.

US-A 3,891,575 describes a temperature resistant catalyst suitable for the purification of exhaust gases. The catalyst itself comprises a three component structure with a metallic base, an elastic priming layer comprising aluminium silicate and an outer layer comprising a catalytically active carrier material and one or more catalytically active metals or metal oxides distributed on the carrier layer.

The present invention has an object of solving the above-described problems by providing a catalyst element for purifying exhaust gases from an internal combustion engine, in which a catalytic substance is carried on or held in a metallic carrier at a high strength of adhesion and which performs high purifying characteristics under severe conditions of high temperature and vibrations such as are encountered in a motorcycle or a four-wheeled vehicle.

### DISCLOSURE OF THE INVENTION

In order to attain the above and other objects, the present invention provides a catalyst element for purifying exhaust gases according to claim 1.

The present invention provides a catalyst element for purifying exhaust gas comprising
- a metallic carrier (30),
- a coating layer (L1) of a heat resistant inorganic oxide formed on a surface of said metallic carrier (30) and
- a catalyst carrying layer (L3) formed on said coating layer (L1) wherein said heat resistant inorganic oxide is at least one selected from the group consisting of silica and alkali metal silicate. minimized.

The heat resistant inorganic oxide is superior in the characteristics of adhesion to metal and functions as an adhesive agent to adhere the catalyst carrying layer to the metallic carrier. The catalyst carrying layer can thus be adhered to the carrier at a high peeling strength (i.e., a high strength of resistance to peeling off). As a result, the amount of peeling of the catalytic substance in the catalyst carrying layer when the carrier is subjected to thermal expansion and vibrations can be minimized.

In addition, by forming the coating layer of heat-resistant inorganic oxide, the heat resisting property of the carrier is improved and also the carrier is protected against strong acid or chloride ion. Therefore, the resisting property against corrosion and acid is improved, resulting in an improvement in the durability.

The metallic carrier may be made in various shapes such as a plate shape, a tube shape, or a honeycomb shape. However, if it is made of a heat-resistant stainless steel thin plate with perforations, the heat resisting property is improved. Further, since perforations are formed by punching the stainless steal plate, a larger surface area can be obtained and thus the characteristics of purifying the exhaust gases are improved. In addition, since the exhaust resistance inside the exhaust pipe becomes small, the catalyst element is suitable for use in a motorcycle or a motor vehicle.

Among the heat-resistant inorganic oxides, silica and alkali metal silicate have a high strength of adhesion to a metallic surface. Therefore, if the heat resistant inorganic oxide is one or more selected from the group consisting of silica, and alkali metal silicate, a high adhesive strength can be obtained. It also functions well as an adhesive agent between the carrier and the catalyst carrying layer.

Further, the catalyst carrying layer preferably comprises: one or more of precious metals of platinum (Pt), paradium (Pd), and rhodium (Rh); and a metallic oxide containing activated alumina as its chief component.

Still furthermore, a total amount of the precious metal or metals carried on the catalyst carrying layer is preferably 2 g or more per unit surface area of 1 m² of the catalyst carrying layer, and a ratio by weight of the precious metals, where platinum and rhodium are carried, is preferably 20 parts of platinum (Pt) to 1 through 4 parts of rhodium (Rh).

### BRIEF DESCRIPTION OF THE DRAWINGS

The above and other objects and the attendant advantages of the present invention will become readily apparent by reference to the following detailed description when considered in conjunction with the accompanying drawings wherein:
FIG. 1 is a side view of that catalyst element for purifying exhaust gases which is disposed in an exhaust pipe;
FIG. 2 is a side view of that catalyst element for purifying exhaust gases which is supported by supporting members;
FIG. 3 is a sectional view taken along the line A-A in FIG. 2;
FIG. 4 is a side view showing a catalyst element and collar portions mounted on the catalyst element;
FIG. 5 is a plan view showing a heat-resistant stainless steel which is a raw material for the carrier; and
FIG. 6 is a schematic view showing the structure of a silica coating which is formed on the surface of the carrier of the catalyst element for purifying exhaust gases as well as a catalyst carrying layer which is formed on the silica coating.

### DETAILED DESCRIPTION OF PREFERRED EMBODIMENTS

Detailed explanation will now be made about the present invention with reference to embodiments.

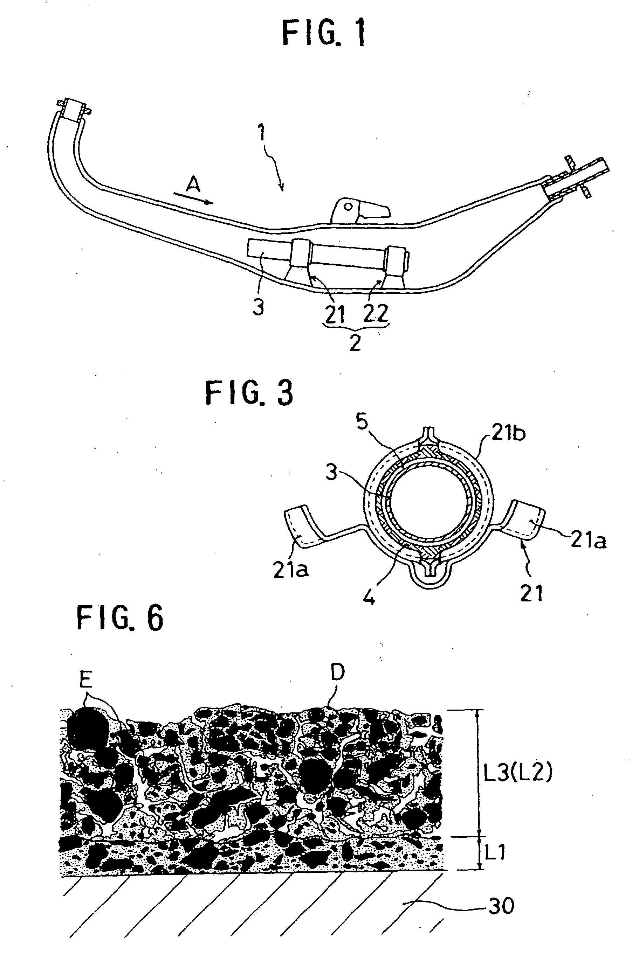

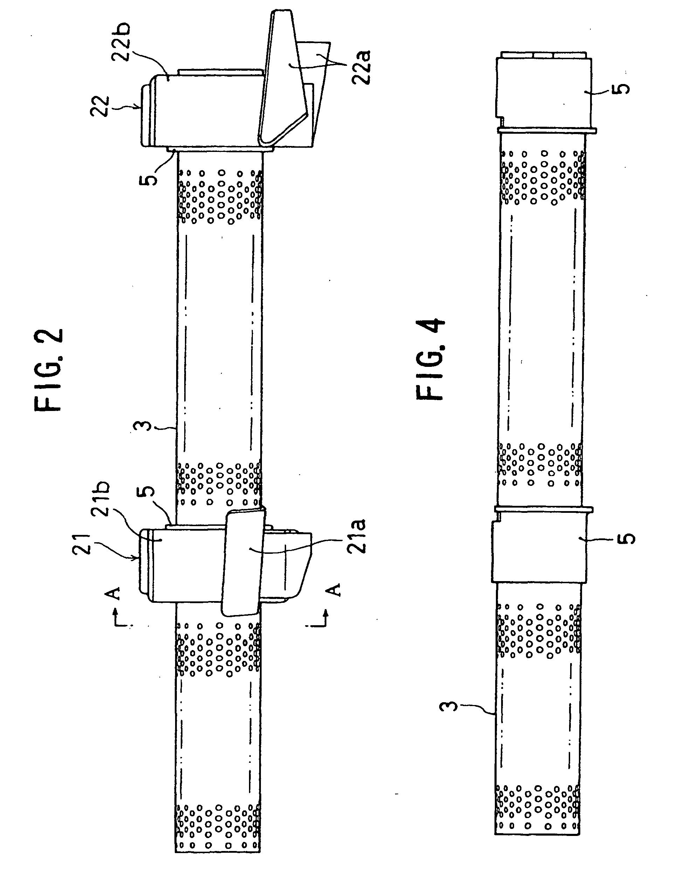

With reference to FIGS. 1 - 4, reference numeral 1 denotes an exhaust pipe which is coupled to an exhaust port of an engine, particularly a two-cycle engine, which is mounted on a motorcycle. Inside this exhaust pipe 1 there is mounted an approximately cylindrical catalyst element 3 for purifying exhaust gases (hereinafter also simply called a catalyst element 3), by means of a set of supporting legs 21, 22 which are provided on an upstream side and on a downstream side of the flow of exhaust gases as shown by an arrow "A." Each of the supporting legs 21, 22 is fixed to the exhaust pipe 1 by means of welding or the like at a base end portion 21a, 22a thereof. On an end portion (i.e., upper end as seen in FIG. 3) of each of the legs, there is provided a holding portion 21b, 22b.

Each of the holding portions 21b, 22b has mounted therein a circular shock absorbing member 4. The catalyst element 3 is held by the holding portions 21b, 22b via the shock absorbing members 4 to thereby attenuate the vibrations to be transmitted to the catalyst element 3. These shock absorbing members 4 are each formed into a net shape by knitting or weaving stainless steel wires into meshes. One layer of net or several woven layers of nets are used in a single fold or in several folds. The cylindrical holding portions 21b, 22b of the supporting legs 21, 22 are disposed coaxially with the catalyst element 3 so that the catalyst element 3 of approximately cylindrical shape can be held therein. The catalyst element 3 of approximately cylindrical shape is in contact with the shock absorbing member 4 inside the holding portions 21b, 22b at collar portions 5 which are mounted on an outer periphery of the catalyst element 3. Engaging claws (not illustrated) which are formed in the holding portions 21b, 22b are engaged with an end surface of each of the collar portions 5 so that the catalyst element 3 can be prevented from deviating or moving in the longitudinal direction.

### Example 1

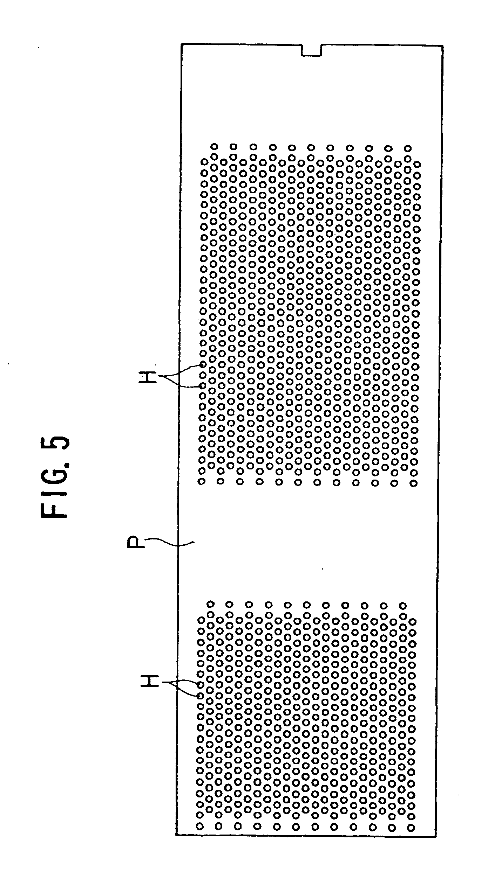

The catalyst element 3 uses, as its carrier 30 (or substrate), a plate member P made of stainless steel (in this Example SUS 430 in JIS, Japanese Industrial Standards, was used) of so-called punched metal, as shown in FIG. 5, in which a large number of punched perforations H are formed. The carrier 30 was made by fabricating a plate member P of stainless steel of 1 mm thick, having perforations H of 2 mm in diameter arranged at a pitch of 3.5 mm, into a cylindrical shape of 25 mm in inner diameter and 260 mm in length.

The carrier 30 was dipped into a slurry of a silica base adhesive agent, was then pulled out of the slurry and was blown with an air blower to remove surplus slurry. It was then dried with hot air of 150° C to thereby form, on an entire surface of the carrier, an undercoat layer L1 which is a coating layer of silica (see FIG. 6). Here, the term "entire surface" means an inner surface and an outer surface of the carrier 30 as well as the surfaces of the side walls of the perforations H. Then, by using activated alumina slurry (35% concentration of solids), the undercoat layer L1 was coated thereon with an alumina layer L2 in similar treatments as those used in forming the undercoat layer L1. The article (or article of manufacture) thus obtained was thereafter sintered at 450° C for 1 hour.

Then, the carrier 30 having formed thereon the alumina layer L2 was dipped into a nitric acid solution containing therein platinum and rhodium. It was then pulled out of the solution and was dried with hot air of 100° C for 10 minutes. Thereafter, it was sintered at 450° C for 1 hour. Platinum and rhodium which are the catalytic substances D were carried on (or held in) the alumina layer L2 to thereby form a catalyst carrying layer L3 which carried thereon or therein platinum (Pt) and rhodium (Rh). Inside the alumina layer L2 which was formed on the undercoat layer L1, there were formed cavities or pores. Platinum and rhodium were carried on the surfaces of alumina E inside and outside the alumina layer L2.

Catalyst element 3A was obtained by performing this kind of treatments on the carrier. This catalyst element 3A was found to carry therein 42 g (grams) of silica, 56 g of alumina, 2.0 g of platinum and 0.4 g of rhodium per unit area (1 m²) of the surface of the carrier 30.

### Example 2

In place of the activated alumina slurry that was used in Example 1, the activated alumina slurry with an addition of cerium oxide was used in carrying out treatments similar to those in Example 1, whereby an alumina layer L2 was formed. Platinum and rhodium were similarly carried on or held in this alumina layer L2 to thereby obtain a catalyst element 3B. This catalyst element 3B was found to carry therein 42 g of silica, 48 g of alumina, 10 g of cerium oxide, 2.1 g of platinum, and 0.4 g of rhodium per unit area (1 m²) of the surface of the carrier 30.

In both of the above-described Examples 1 and 2, the formation of the undercoat layer L1 and the alumina layer L2 as well as the carrying of platinum and rhodium were carried out by simple treatments in the form of dipping. Therefore, the treatment works are easy.

A total carrying amount of precious metals of platinum, paradium, and rhodium to be carried on the surface of the carrier 30 is preferably 2 g or more per unit area (1 m²) of the surface of the carrier 30. In case platinum and rhodium are carried as in the above-described two Examples 1 and 2, the weight ratio thereof is preferably 20 parts of platinum to 1 through 4 parts of rhodium.

### Comparative Example

A catalyst element 3C was obtained by omitting the treatment of forming the undercoat layer L1 from the treatments in the Example 1. This catalyst element 3C was found to carry 57 g of alumina, 2.2 g of platinum, and 0.4 g of rhodium per unit area (1 m²) of the surface of the carrier 30.

### Test 1

Initial weight of each of the above-described catalyst elements 3A, 3B, 3C was measured first. Then, heat treatment steps of holding each catalyst element in an electric furnace held at 800° C for 30 minutes and thereafter cooling it outside the furnace for 30 minutes were carried out two times. Each catalyst element was thereafter heated once again under the same heating conditions as above, was taken out of the furnace, and was then rapidly cooled by dipping it into water. Each catalyst element was subsequently subjected to ultrasonic treatment in an ultrasonic cleaning apparatus filled with pure water for 30 minutes and was thereafter dried at 200° C. Weight of each of the catalyst element was then measured again, and a comparison was made between the weight before the treatments and the weight after the treatments in order to measure the amount of peeling off of the catalytic substances. The peeling strength (i.e., the strength to resist the peeling off) was thus evaluated and the results are given in Table 1.

**Table 1**

| Catalyst element | Initial weight (g) | Weight after US washing (g) | Amount of peeling (g) | Ratio of peeling (%) |
|---|---|---|---|---|
| 3A | 179.343 | 179.307 | 0.036 | 0.91 |
| 3B | 178.854 | 178.814 | 0.040 | 0.98 |
| 3C | 176.306 | 174.756 | 1.550 | 65.03 |
| US: ultrasonic | | | | |

As can be seen from Table 1, as compared with the catalyst element 3C of the Comparative Example, the catalyst elements 3A, 3B according to the present invention have been found to have superior peeling strength against the thermal load and vibrations that are added by heat cycles and rapid cooling by dipping into water.

### Test 2

Each of the catalyst elements 3A, 3B, 3C was cut into a length of 80 mm and was then subjected to the same treatments as in Test 1 in order to obtain test catalyst elements. A model gas was purified with these test catalyst elements. Measurements were made of the ratio of reduction (i.e., purification ratio) of hydrocarbons (HC) and carbon monoxide (CO) in the model gas, and the purifying characteristics of each of the catalyst elements 3A, 3B, 3C were evaluated. The conditions of evaluations were as follows. The results of evaluation are given in Table 2.

### Conditions

Test model gas: CO 1.50 %, C₃H₆ 3000 ppm, NO 500 ppm, H₂ 0.5 %, O₂ 1.74 %, CO₂ 11 % (balance is N₂)
Space velocity: 17000/hr
Evaluation temperature: 400° C

**Table 2**

| Catalyst element | HC purifying ratio (%) | CO purifying ratio (%) |
|---|---|---|
| 3A | 61.8 | 60.5 |
| 3B | 65.7 | 70.9 |
| 3C | 28.0 | 42.1 |

As can be seen from Table 2, in the purifying test of test catalyst elements using the model gas, the catalyst elements 3A, 3B of the present invention were found to have maintained purifying characteristics even after the heating and vibrating treatments shown in Test 1 and were found to have superior durability characteristics.

### Test 3

Catalyst elements 3A, 3B, 3C were respectively disposed in an exhaust pipe of a motorcycle having mounted thereon a single cylinder, two-stroke engine of 125 cc in piston displacement. After running the motorcycle at a constant speed of 100 km/hr for 100 hours (equivalent to a total of 10000 km of travelling distance) on a dynamometer car, the purifying ratios of hydrocarbons (HC) and carbon monoxide (CO) at running in ECE (European Economic Commission) Regulation Mode 40 were measured and the results thereof are given in Table 3.

**Table 3**

| Catalyst element | HC purifying ratio (%) | CO purifying ratio (%) |
|---|---|---|
| 3A | 40 | 50 |
| 3B | 50 | 55 |
| 3C | 5 | 10 |

As can be seen from Table 3, the catalyst elements 3A, 3B of the present invention were testified to have superior durability characteristics also from the purifying ratios at running in ECE Regulation Mode 40 after running 10000 km on the dynamometer car.

As can be seen from the above-described explanations, according to the present invention, the peeling strength of the catalyst substances off (or away from) the carrier under severe thermal and vibrating conditions can be improved. Therefore, when the catalyst element for purifying the exhaust gases is used under the above-described conditions, the amount of peeling of the catalytic substances away from the carrier can be minimized. As a consequence, the catalytic substances carried on the carrier can be used for the purpose of purification of the exhaust gases for a long period of time. The decrease in the purifying characteristics can thus be minimized and the durability can be improved.

## Claims

1. A catalyst element for purifying exhaust gases comprising
- a metallic carrier (30),
- a coating layer (L1) of a heat resistant inorganic oxide formed on a surface of said metallic carrier (30) and
- a catalyst carrying layer (L3) formed on said coating layer (L1)wherein
said heat resistant inorganic oxide is at least one selected from the group consisting of silica and alkali metal silicate.

2. The catalyst element according to claim 1, wherein said carrier (30) is made of a heat resistant stainless steel plate with a plurality of perforations formed therein.

3. The catalyst element according to claim 1 or claim 2, wherein said catalyst carrying layer (L3) comprises one or more of precious metals of platinum (Pt), palladium (Pd), and rhodium (Rh) and a metallic oxide containing activated alumina as a chief component.

4. The catalyst element according to claim 3, wherein a total amount of said precious metal or metals carried on said carrier (30) is 2 grams or more per unit surface area of 1 m² of said catalyst carrying layer (L3).

5. The catalyst element according to claim 3 or 4, wherein a ratio by weight of said precious metals, where platinum (Pt) and rhodium (Rh) are carried, is 20 parts of platinum to 1 through 4 parts of rhodium.

## Patentansprüche

1. Katalysatorelement zur Reinigung von Abgasen, umfassend
- einen metallischen Träger (30),
- eine auf einer Oberfläche des metallischen Trägers (30) ausgebildete Überzugschicht (L1) aus einem hitzebeständigen anorganischen Oxid und
- eine auf der Überzugschicht (L1) ausgebildete katalysatorenthaltende Schicht (L3), wobei das hitzebeständige anorganische Oxid wenigstens eines ausgewählt aus der Gruppe bestehend aus Siliciumoxid und Alkalisilicat ist.

2. Katalysatorelement nach Anspruch 1, wobei der Träger (30) aus einem hitzebeständigen rostfreien Stahlblech mit einer darin ausgebildeten Mehrzahl von Perforierungen hergestellt ist.

3. Katalysatorelement nach Anspruch 1 oder 2, wobei die katalysatorenthaltende Schicht (L3) ein oder mehrere Edelmetalle aus der Gruppe bestehend aus Platin (Pt), Palladium (Pd) und Rhodium (Rh) und ein als Hauptkomponente aktiviertes Aluminiumoxid aufweisendes Metalloxid umfasst.

4. Katalysatorelement nach Anspruch 3, wobei eine Gesamtmenge des auf dem Träger (30) enthaltenen Metalls oder der auf dem Träger enthaltenen Metalle 2 Gramm oder mehr pro Oberflächen-Einheitsfläche von 1 m² der katalysatortragenden Schicht (L3) beträgt.

5. Katalysatorelement nach Anspruch 3 oder 4, wobei ein Gewichtsverhältnis der Edelmetalle, für den Fall, dass Platin (Pt) und Rhodium (Rh) enthalten sind, 20 Teile Platin zu 1 bis 4 Teilen Rhodium beträgt.

## Revendications

1. Elément catalyseur pour purifier les gaz d'échappement comprenant :
- un support métallique (30),
- une couche de revêtement (L1) en au moins un oxyde inorganique thermorésistant formée sur une surface dudit support métallique (30) et
- une couche de support de catalyseur (L3) formée sur ladite couche de revêtement (L1), dans lequel ledit oxyde inorganique thermorésistant est au moins un oxyde choisi dans le groupe constitué par la silice et le silicate de métal alcalin.

2. Elément catalyseur selon la revendication 1, dans lequel ledit support (30) est fait d'une plaque en acier inoxydable thermorésistante ayant une pluralité de perforations formées dans celle-ci.

3. Elément catalyseur selon la revendication 1 ou la revendication 2, dans lequel ladite couche de support de catalyseur (L3) comprend un ou plusieurs métaux précieux de platine (Pt), palladium (Pd) et rhodium (Rh) et un oxyde métallique contenant une alumine activée en tant que composant principal.

4. Elément catalyseur selon la revendication 3, dans lequel une quantité totale dudit métal ou desdits métaux précieux présente sur ledit support (30) est de 2 grammes ou plus par surface unitaire de 1 m² de ladite couche de support de catalyseur (L3).

5. Elément catalyseur selon la revendication 3 ou 4, dans lequel un rapport en poids desdits métaux précieux, lorsque du platine (Pt) et du rhodium (Rd) sont supportés, est de 20 parts de platine pour 1 à 4 parts de rhodium.
